# EUROPEAN PATENT APPLICATION

(11) **EP 4 317 002 A1**
(43) Date of publication of application: **07.02.2024**
(21) Application number: 23181486.4
(22) Date of filing: 26.06.2023
(51) Int. Cl.: B65D 5/02, B65D 5/42, B65D 5/64

(54) **PACKAGING BLANK FOR FORMING A PACKAGE AND PACKAGE FORMED FROM A PACKAGING BLANK**

(30) Priority: 02.08.2022 EP 22188315
(71) Applicant: Tetra Laval Holdings & Finance S.A., 1009 Pully (CH)
(72) Inventor: BARBIERI, Marcello, 41123 Modena (IT); FEDELE, Francesca, 41123 Modena (IT); MALAVASI, Filippo, 41123 Modena (IT); GERARDI, Daniele, 41123 Modena (IT); FORCELLINI, Carlo, 42048 Rubiera (IT); NIKLASSON, Henrik, 22186 Lund (SE); DE PIETRI TONELLI, Roberto, 41123 Modena (IT); RONCHETTI, Luca, 41123 Modena (IT); GIAMPIERI, Andrea, 41123 Modena (IT); FIORINI, Matteo, 41123 Modena (IT); POPPI, Marco, 41123 Modena (IT)
(74) Representative: Tetra Pak - Patent Attorneys SE

(57) **Abstract**

There is described a packaging blank (2) comprising a first longitudinal boundary edge (8), a second longitudinal boundary edge (9), a first transversal boundary edge (10) and a second transversal boundary edge (11). The packaging blank also comprises a top crease pattern (4) having a first transversal crease line (15) and a second transversal crease line (16) and a bottom crease pattern (5) having a third transversal crease line (17) and a fourth transversal crease line (18). The second transversal crease line (16) is closer to the first longitudinal boundary edge (8) and/or to the second longitudinal boundary edge (8) than the first transversal crease line (15) and/or the fourth transversal crease line (18) is closer to the first longitudinal boundary edge (8) and/or the second longitudinal boundary edge (9) than the third transversal crease line (17).

## Description

### TECHNICAL FIELD

The present invention relates to a packaging blank, in particular having a multilayer structure, for forming a package filled with a pourable product, in particular with a pourable food product.

Advantageously, the present invention also relates to a package filled with a pourable product, in particular a pourable food product, and being formed from a packaging blank.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding a laminated packaging blank. The packaging blank has a multilayer structure comprising a fibrous base layer, e.g. of paper or cardboard, covered on both sides with layers of heat-seal plastic material, e.g. polyethylene. In the case of aseptic packages for long-storage products, such as UHT milk, the packaging blank also comprises a layer of oxygen-barrier material (an oxygen-barrier layer), e.g. an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging apparatuses, which form the packages from respective packaging blanks. These packaging blanks can be provided in the form of single packaging blanks or in form of a web, which is formed from a plurality of successively arranged packaging blanks.

In the case of the packaging apparatus being designed to form the packages from a web, the packaging apparatus advances and sterilizes the web, which is then formed into a tube and filled with the pourable product before the tube is formed into individual sealed packages.

In order to facilitate the formation and for defining the shape of the packages, the packaging blanks are provided with a plurality of crease lines.

Typically, a packaging blank has a rectangular shape and is delimited by a first longitudinal boundary edge, a second longitudinal boundary edge, a first transversal boundary edge and a second transversal boundary edge.

A typical packaging blank also comprises a top crease pattern configured to form a top portion of the package and a bottom crease pattern configured to form a bottom portion of the package. The top crease pattern comprises at least a first transversal crease line and a second transversal crease line and the bottom crease pattern comprises at least a third transversal crease line and a fourth transversal crease line. Moreover, the first transversal crease line and the second transversal crease line and the third transversal crease line and the fourth transversal crease line are equally spaced from the first longitudinal boundary edge and the second longitudinal boundary edge.

It is known that the packaging blanks are produced within converting factories in which a base web of packaging material is formed, the base web of packaging material giving rise, after the execution of a cutting process, to a plurality of web of packaging blanks. In other words, the base web of packaging material, before being cut in a direction parallel to its longitudinal extension, comprises a plurality of interconnected and parallelly arranged webs of packaging blanks.

Moreover, prior to the cutting process, creasing tools are used to form the various crease lines. More specifically, the creasing tools comprise at least:
- first creasing elements associated to a first portion of the base web of packaging material giving rise to a first web of packaging blanks; and
- second creasing elements associated to a second portion of the base web of packaging material being connected to the first portion and giving rise to a second web of packaging blanks.

The first portion of the base web of packaging material and the second portion of the web of packaging material are arranged side by side, i.e. next to each other, along a direction that is arranged transversally, in particular perpendicularly, with respect to the longitudinal extension of the web of packaging material.

The first creasing elements and the second creasing elements are staggered with respect to one other such that e.g. the respective top crease patterns of the first portion are displaced along an advancement direction of the base web of packaging material with respect to the respective top crease patterns of the second portion.

During the action of the creasing tools onto the base web of packaging material, it may occur that so called wild crease lines are created. These wild crease lines may e.g. expand from e.g. the respective first transversal crease line of e.g. the first portion towards the second portion.

A desire is felt in the sector, to further improve the packaging blanks such to impede as much as possible the formation of wild crease lines.

### DISCLOSURE OF INVENTION

It is therefore an object of the present invention to provide an improved packaging blank.

It is another object of the present invention to provide an improved package formed from a packaging blank.

According to the present invention, there is provided a packaging blank as claimed in claim 1.

Preferred non-limiting embodiments of the packaging blank are claimed in the respective dependent claims.

According to the present invention, there is also provided a package according to claim 15.

### BRIEF DESCRIPTION OF THE DRAWINGS

One non-limiting embodiment of the present invention will be described by way of example with reference to the accompanying drawings, in which:
Figure 1 is a schematic view of a packaging machine for forming packages, with parts removed for clarity;
Figure 2 is a top view of a packaging blank according to the present invention, with parts removed for clarity.

### BEST MODES FOR CARRYING OUT THE INVENTION

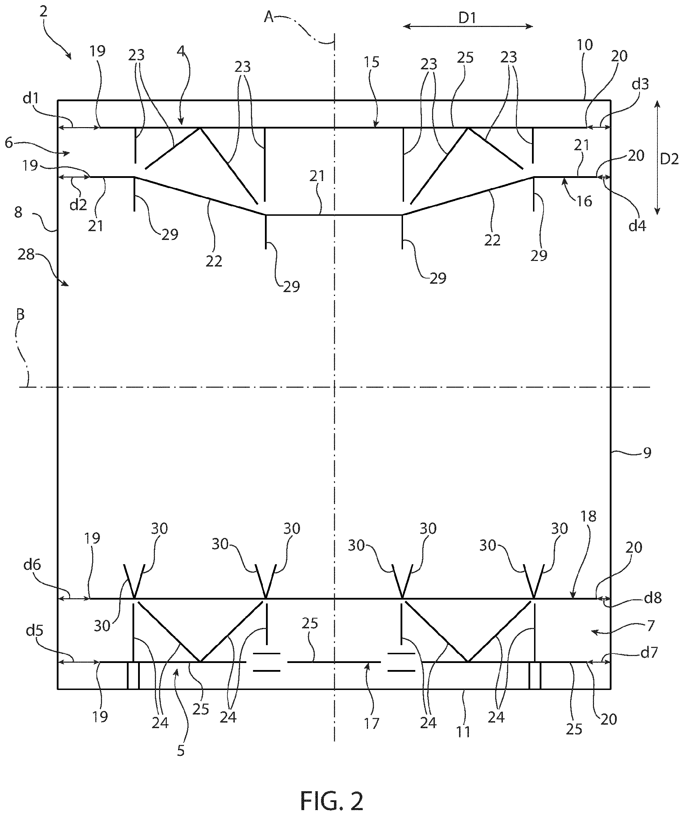

Number 1 indicates as a whole a packaging machine for producing (sealed) packages 37 of a pourable product, in particular a pourable food product such as pasteurized milk, fruit juice, wine, tomato sauce, etc., from respective packaging blanks 2 (see Figures 2 to 5).

Preferentially, packaging blanks 2 may have a multilayer structure.

In more detail, each packaging blank 2 may comprise at least a layer of fibrous material, such as e.g. a paper or cardboard layer, and at least two layers of heat-seal plastic material, e.g. polyethylene, interposing the layer of fibrous material in between one another.

One of these two layers of heat-seal plastic material may define an inner face of the respective package 37 formed from the respective packaging blank 2 and eventually contacting the pourable product.

Preferably but not necessarily, each packaging blank 2 may also comprise a layer of gas- and light-barrier material, e.g. aluminum foil or ethylene vinyl alcohol (EVOH) film, in particular being arranged between one of the layers of the heat-seal plastic material and the layer of fibrous material. Preferentially but not necessarily, packaging blank 2 may also comprise a further layer of heat-seal plastic material being interposed between the layer of gas- and light-barrier material and the layer of fibrous material.

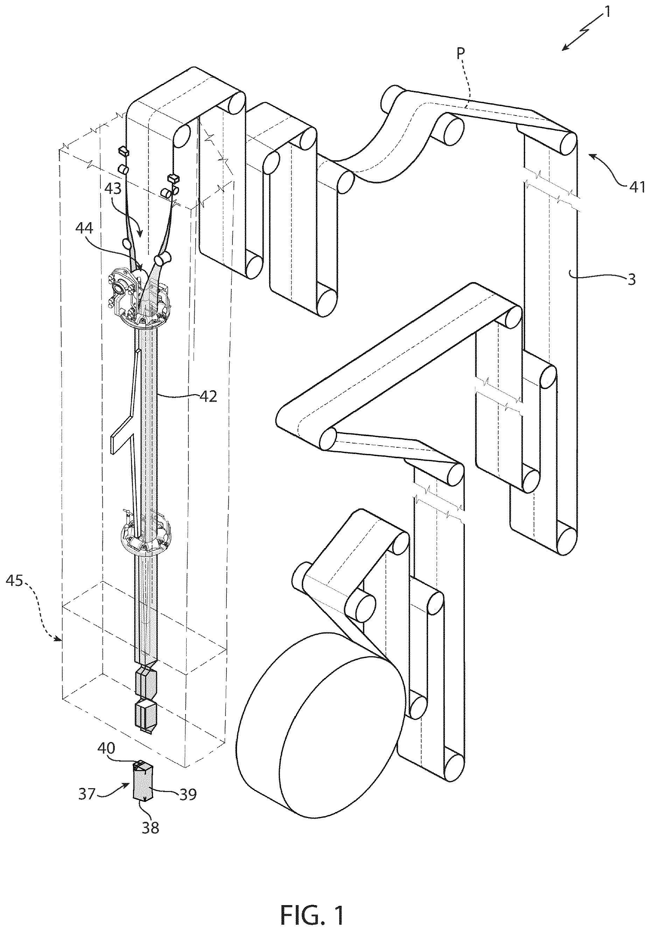

According to the example shown in Figure 1, packaging blanks 2 are provided in the form of a web 3.

In more detail, web 3 may be formed from a plurality of successively arranged packaging blanks 2.

In other words, the successively arranged packaging blanks 2 define a plurality of repeat units of web 3. In particular, each repeat unit (i.e. the respective packaging blank 2) forms the precursor of one respective package 37. In other words, packaging machine 1 may be configured to produce packages 37 from web 3 such that each package 37 results from one respective packaging blank 2.

In particular, each packaging blank 2 may comprise a desired pattern/decoration.

Each packaging blank 2 may be designed to form a package 37 comprising:
- a first package portion 38, in particular having a first wall;
- a second package portion 40, in particular having a second wall, displaced from the first package portion 38 along a longitudinal direction of package 37
- an intermediate package portion 39, in particular having a side wall, being (fixedly) connected to and extending from the first package portion 38, in particular the first wall.

In more detail, each first package portion 38 and each second package portion 40 may define respectively a bottom portion and a top portion of the respective package.

Additionally, each intermediate package portion 39 may be interposed between the respective first package portion 38 and the respective second package portion 40.

In particular, when each package 37 is in its nominal position (i.e. when being used by a user in an intended manner), the user recognizes first package portion 38 as the bottom portion and second package portion 40 as the top portion.

Preferentially, each second package portion 40 may be defined as the portion of the package, which can be manipulated such to allow for the outpouring of the pourable product. For example, the second package portion 40 may be manipulated so as to obtain a pouring opening or the second package portion 40 may comprise an opening device (e.g. a cap), which can be manipulated.

Preferentially, each intermediate portion 39 may be defined to be gripped by a user.

In further detail, each first wall may define a support surface of the respective package 37, which may be designed to be put in contact with a support, such as e.g. a shelf, when, in use, being e.g. exposed within a sales point or when being stored.

In particular, each first wall may define a bottom wall of the respective package 37 (i.e. when the respective package 37 is arranged on the support the first wall is in contact with the support).

More specifically, each side wall may be rounded or may have at least one or more rounded portions.

Furthermore, each side wall may be interposed between the respective first wall and the respective second wall.

In particular, when the package 37 is arranged on the support, the respective second wall may define a respective top wall.

According to some possible embodiments, each first wall and the respective second wall may be parallel to one another. Alternatively, the first wall and the second wall may be inclined with respect to one another. In particular, the second wall may define a slanted top or may define a portion of a gable-top.

With particular reference to Figure 2, each packaging blank 2 may comprise:
- a top crease pattern 4 configured to form the respective second package portion 40, preferentially the respective top portion, even more preferentially the top wall and top flaps, of the respective package 37; and
- a bottom crease pattern 5 configured to form the respective first package portion 38, preferentially the respective bottom portion, even more preferentially the respective bottom wall and bottom flaps, of the respective package 37.

In more detail, each top crease pattern 4 may define a respective top region 6 and each bottom crease pattern 5 may define a respective bottom region 7 of the respective packaging blank 2.

In more detail, each packaging blank 2 may comprise:
- a first longitudinal boundary edge 8 and a second longitudinal boundary edge 9 spaced apart from one another along a first direction D1 transversal, preferentially perpendicular, to a longitudinal central axis A of the respective packaging blank 2; and
- a first transversal boundary edge 10 and a second transversal boundary edge 11 spaced apart from one another along a second direction D2 parallel to longitudinal central axis A and/or transversal, preferentially perpendicular, to first direction D1 and/or transversal, preferentially perpendicular, to a transversal central axis B of the respective packaging blank 2.

Preferentially, each transversal central axis B may be perpendicular to the respective longitudinal central axis A.

Preferentially, each longitudinal central axis A may intersect with the respective transversal central axis B within a centre point of the respective packaging blank 2.

In further detail, each packaging blank 2 may extend within a plane spanned by longitudinal central axis A and transversal axis B.

Moreover, each packaging blank 2 may have a (substantially) 2-dimensional shape, i.e. respective extensions of each packaging blank 2 along longitudinal central axis A and transversal central axis B are significantly larger than a thickness of packaging blank 2.

Preferentially, each packaging blank 2 may have a rectangular or square shape.

Additionally, first direction D1 may be parallel to transversal central axis B.

Moreover, each first longitudinal boundary edge 8 and each second longitudinal boundary edge 9 may be connected to and interposed between the respective first transversal boundary edge 10 and the respective second transversal boundary edge 11.

Preferentially, each first longitudinal boundary edge 8 and each second longitudinal boundary edge 9 may be arranged at an angle of about 90° with respect to the respective first transversal boundary edge 10 and the respective second transversal boundary edge 11.

It should be noted that in the case of each packaging blank 2 being arranged singularly, i.e. separated from the other packaging blanks 2, the respective first longitudinal boundary edge 8, the respective second longitudinal boundary edge 9, the respective first transversal boundary edge 10 and the respective second transversal boundary edge 11 may be real edges.

In the case of packaging blanks 2 being arranged in the form of a web 3, the respective first longitudinal boundary edge 8 and the respective second longitudinal boundary edge 9 may be real edges (as also shown in Figure 2) and the respective first transversal boundary edge 10 and the respective second transversal boundary edge 11 may be imaginary edges. In particular, each first transversal boundary edge 10 of one packaging blank 2 may be adjacent to, or coincide with, the respective second transversal boundary edge 11 of another packaging blank 2.

Alternatively, the respective first transversal boundary edge 10 and the respective second transversal boundary edge 11 may be real edges and the respective first longitudinal boundary edge 8 and the respective second longitudinal boundary edge 9 may be imaginary edges. In particular, each first longitudinal boundary edge 8 of one packaging blank 2 may be adjacent to the respective second longitudinal boundary edge 9 of another packaging blank 2.

Moreover, each longitudinal central axis A may allow to define the respective longitudinal central axis of the respective package 37 formed from the respective packaging blank 2.

With particular reference to Figure 2, each top crease pattern 4 comprises at least a first transversal crease line 15 and a second transversal crease line 16 extending transversally to longitudinal central axis A of the respective packaging blank 2.

Preferentially, each first transversal crease line 15 and the respective second transversal crease line 16 are displaced from one another along second direction D2.

Preferentially, each first transversal crease line 15 is interposed between the respective first transversal boundary edge 10 and second transversal crease line 16. In other words, each first transversal crease line 15 is closer to the respective first transversal boundary edge 10 than the respective second transversal crease line 16.

According to some preferred non-limiting embodiments, no further transversal crease line transversal to the respective longitudinal central axis A is interposed between the respective first transversal boundary edge 10 and the respective first transversal crease line 15.

With particular reference to Figure 2, each bottom crease pattern 5 may comprise at least a third transversal crease line 17 and a fourth transversal crease line 18 extending transversally to the respective longitudinal central axis A of the respective packaging blank 2.

Preferentially, each third transversal crease line 17 and the respective fourth transversal crease line 18 are displaced from one another along second direction D2.

Preferentially, each third transversal crease line 17 is interposed between the respective second transversal boundary edge 11 and the respective fourth transversal crease line 18. In other words, each third transversal crease line 17 is closer to the respective second transversal boundary edge 11 than the respective fourth transversal crease line 18.

According to some preferred non-limiting embodiments, no further transversal crease line transversal to the respective longitudinal central axis A is interposed between the respective second transversal boundary edge 11 and the respective third transversal crease line 17.

According to some preferred non-limiting embodiments, each first transversal crease line 15 and/or each third transversal crease line 17 may be parallel to the respective first transversal boundary edge 10 and the respective second transversal boundary edge 11.

In further detail, each first transversal crease line 15, each second transversal crease line 16, each third transversal crease line 17 and each fourth transversal crease line 18 may extend between a respective first end 19 facing and/or being adjacent to the respective first longitudinal boundary edge 8 and a respective second end 20 facing and/or being adjacent to the respective second longitudinal boundary edge 9.

According to some possible non-limiting embodiments, one or more of first transversal crease lines 15, second transversal crease lines 16, third transversal crease lines 17 and fourth transversal crease lines 18 may extend between the respective first end 19 and the respective second end 20 in a continuous manner (i.e. there are no interruptions within the respective crease line) or in a discontinuous manner (i.e. there are one or more interruptions within the respective crease line).

In the specific embodiment shown, each first transversal crease line 15, each second transversal crease line 16 and each fourth transversal crease line 18 is continuous.

More specifically, in the specific example shown, each first transversal crease line 15 and each fourth transversal crease line 18 is continuous and has a rectilinear shape, while each second transversal crease line 16 is continuous, but with a more complex configuration.

Moreover, according to the specific example, each third transversal crease line 17 is discontinuous comprising a plurality of rectilinear portions 25.

Advantageously, the respective first end 19 of each second transversal crease line 16 is closer to the respective first longitudinal boundary edge 8 than the respective first end 19 of the respective first transversal crease line 15; and/or
- the respective second end 20 of each transversal crease line 16 is closer to the respective second longitudinal boundary edge 9 than the respective second end 20 of the respective first transversal crease line 15; and/or
- the respective first end 19 of each fourth transversal crease line 18 is closer to the respective first longitudinal boundary edge 8 than the respective first end 19 of the respective third transversal crease line 17; and/or
- the respective second end 20 of each fourth transversal crease line 18 is closer to the respective second longitudinal boundary edge 9 than the respective second end 20 of the respective third transversal crease line 17.

In other words, the respective first end 19 of each first transversal crease line 15 is closer to the respective longitudinal central axis A than the respective first end 19 of the respective second transversal crease line 16; and/or
- the respective second end 20 of each first transversal crease line 15 is closer to the respective longitudinal central axis A than the respective second end 20 of the respective second transversal crease line 16; and/or
- the respective first end 19 of each third transversal crease line 17 is closer to the respective longitudinal central axis A than the respective first end 19 of the respective fourth transversal crease line 18; and/or
- the respective second end 20 of each third transversal crease line 17 is closer to the respective longitudinal central axis A than the respective second end 20 of the respective fourth transversal crease line 18.

In further detail, a respective first distance d1 between the respective first end 19 of each first transversal crease line 15 and the respective first longitudinal boundary edge 8 is larger than a respective second distance d2 between the respective first end 19 of the respective second transversal crease line 16 and the respective first longitudinal boundary edge 8; and/or
- a respective third distance d3 between the respective second end 20 of each first transversal crease line 15 and the respective second longitudinal boundary edge 9 is larger than a respective fourth distance d4 between the respective second end 20 of the respective second transversal crease line 16 and the respective second longitudinal boundary edge 9; and/or
- a respective fifth distance d5 between the respective first end 19 of each third transversal crease line 17 and the respective first longitudinal boundary edge 8 is larger than a respective sixth distance d6 between the respective first end 19 of the respective fourth transversal crease line 18 and the respective first longitudinal boundary edge 8; and/or
- a respective seventh distance d7 between the respective second end 20 of each third transversal crease line 17 and the respective second longitudinal boundary edge 9 is larger than a respective eighth distance d8 between the respective second end 20 of the respective fourth transversal crease line 18 and the respective second longitudinal boundary edge 9.

In particular, each first distance d1, each second distance d2, each third distance d3, each fourth distance d4, each fifth distance d5, each sixth distance d6, each seventh distance d7 and each eighth distance d8 are determined with respect to a respective reference axis normal to the respective first longitudinal boundary edge 8 or the respective second longitudinal boundary edge 9.

According to some preferred non-limiting embodiments, no further crease lines are interposed between each first end 19 and the respective first longitudinal boundary edge 8 and/or no further crease lines are interposed between each second end 20 and the respective second longitudinal boundary edge 9.

With particular reference to Figure 2, each second transversal crease line 16 may comprise a plurality of first linear portions 21 perpendicular to the respective longitudinal central axis A and a plurality of second linear portions 22 transversal to the respective longitudinal central axis A.

In further detail, each top crease pattern 4 may comprise a plurality of additional crease lines 23, preferentially some being parallel and some being transversal to the respective longitudinal central axis A. In particular, additional crease lines 23 may be interposed between the respective first transversal crease line 15 and the respective second transversal crease line 16.

In further detail, each bottom crease pattern 5 may comprise a plurality of additional crease lines 24, preferentially some being parallel and some being transversal to the respective longitudinal central axis A. In particular, additional crease lines 24 may be interposed between the respective third transversal crease line 17 and the respective fourth transversal crease line 18.

With particular reference to Figure 2, each top crease pattern 4 and each bottom crease pattern 5 may delimit an intermediate region 28 designed to form a side wall of the respective package 37.

In more detail, each intermediate region 28 may be interposed between the respective second transversal crease line 16 and the respective fourth transversal crease line 18.

According to some preferred non-limiting embodiments, no crease line, preferentially being substantially parallel to the respective longitudinal central axis A, extend from the respective second transversal crease line 16 and up to the respective fourth transversal crease line 18.

According to some preferred non-limiting embodiments, each packaging blank 2 may further comprise one or more first linear crease lines 29 extending from the respective second transversal crease line 16 and within the respective intermediate region 28 and/or one or more second linear crease lines 30 extending from the respective fourth transversal crease line 18 and within the respective intermediate region 28.

Advantageously, each first linear crease line 29 may extend from the respective second transversal crease line 16 and towards, but in particular not up to, the respective fourth transversal crease line 18 and/or each second linear crease line 30 may extend from the respective fourth transversal crease line 18 and towards, but in particular not up to, the respective second transversal crease line 16.

Preferentially, each first linear crease line 29 and each second linear crease line 30 may extend along only a portion of the respective intermediate region 28.

Preferentially, each first linear crease line 29 may be parallel to longitudinal central axis A.

According to some preferred non-limiting embodiments, each second linear crease lines 30 may face at least a respective first linear crease line 29.

According to some preferred non-limiting embodiments, each packaging blank 2 may comprise a plurality of pairs of second linear crease lines 30.

Preferentially, the respective second linear crease lines 30 of each pair may be arranged such to define a V-shape, preferentially with an intersection point lying on or at least being adjacent to the respective fourth transversal crease line 18.

According to some preferred non-limiting embodiments, the respective crease lines, e.g. first transversal crease line 15 and/or second transversal crease line 16 and/or third transversal crease line 17 and/or fourth transversal crease line 18 and/or additional crease lines 22 and/or additional crease lines 23 and/or first linear crease lines 29 and/or second linear crease lines 30, of each packaging blank 2 may define a plurality of panels. More specifically, the panels may give origin and/or may correspond to various sections of the respective package 37.

More specifically, the panels may give origin and/or may correspond to the respective first package portion 38, preferentially the respective bottom portion, the respective intermediate package portion 39 and the respective second package portion 40, preferentially the respective top portion.

Even more specifically, some of the panels may give origin and/or may correspond to the respective first package portion 38 and/or some of the panels may give origin and/or may correspond the second package portion 40 and/or some panels give origin and/or may correspond to the intermediate package portion 39.

According to some preferred non-limiting embodiments, the respective first linear crease lines 29 each packaging blank 2 may be arranged in correspondence of a respective section defined by one or more respective panels, which in turn corresponds to a respective corner of the respective second package portion 40, preferentially of the respective top portion, even more preferentially of the respective second wall.

According to some possible non-limiting embodiments, each second linear crease line 30 may be arranged in correspondence of a respective section defined by one or more respective panels, which in turn correspond to a respective corner of the respective first package portion 38, preferentially of the respective bottom portion, even more preferentially of the respective first wall.

In particular, top crease pattern 4 defines the panels that form the top portion, preferentially the top wall, of package 37.

Similarly, bottom crease pattern 5 defines the panels that form the bottom portion, preferentially the bottom wall, of package 37.

In this case, each first linear crease line 29 of the packaging blank 2 may be arranged in correspondence of a section defined by one or more respective panels, which in turn correspond to a respective corner of the top portion, even more preferentially of the second wall.

Similarly, each second linear crease line 30 of the packaging blank 2 may be arranged in correspondence of a section defined by one or more respective panels, which in turn correspond to a respective corner of the bottom portion, even more preferentially of the first wall.

With particular reference to Figure 1, packaging machine 1 may be configured to form respective packages 37 filled with the pourable product from packaging blanks 2, preferentially when being provided in the form of a respective web 3.

In more detail, packaging machine 1 may comprise at least:
- a conveying device 41 configured to advance web 3 along a web advancement path P at least to a tube forming station at which web 3 is formed into a tube 42; and
- a tube forming and sealing device 43 configured to form tube 42 from web 3 and to longitudinally seal tube 42 at the tube forming station;
- a filling device 44 configured to fill tube 42 with the pourable product; and
- a package forming unit 45 configured to form, transversally seal and cut tube 42 for obtaining packages 37.

The advantages of packaging blank 2 according to the present invention will be clear from the foregoing description.

In particular, the Applicant has observed that by having first transversal crease lines 15 and/or third transversal crease lines 17 being more distanced from the respective first longitudinal boundary edges 8 and/or the respective second longitudinal boundary edges 9 than respectively the respective second transversal crease lines 16 and the respective fourth transversal crease lines 18 it is possible to at least reduce, eventually to even eliminate, the risk of the formation of wild crease lines.

Clearly, changes may be made to packaging blank 2 as described herein without, however, departing from the scope of protection as defined in the accompanying claims.

## Claims

1. Packaging blank (2) for forming a package (37) filled with a pourable product comprising:
- a first longitudinal boundary edge (8) and a second longitudinal boundary edge (9) spaced apart from one another along a first direction (D1) transversal to a longitudinal central axis (A) of the packaging blank (2); and
- a first transversal boundary edge (10) and a second transversal boundary edge (11) spaced apart from one another along a second direction (D2) parallel to the longitudinal central axis (A);
- a top crease pattern (4) configured to form a top portion of the package (37); and
- a bottom crease pattern (5) displaced from the top crease pattern (4) along the second direction (D2) and configured to form a bottom portion of the package (37) ;
wherein the top crease pattern (4) comprises at least a first transversal crease line (15) and a second transversal crease line (16) extending transversally to the longitudinal central axis (A) of the packaging blank (2), the first transversal crease line (15) being interposed between the first transversal boundary edge (10) and the second transversal crease line (16);
wherein the bottom crease pattern (5) comprises at least a third transversal crease line (17) and a fourth transversal crease line (18) extending transversally to the longitudinal central axis (A) of the packaging blank (2), the third transversal crease line (17) being interposed between the second transversal boundary edge (11) and the fourth transversal crease line (18);
wherein each one of the first transversal crease line (15), the second transversal crease line (16), the third transversal crease line (17) and the fourth transversal crease line (18) extends between a respective first end (19) facing the first longitudinal boundary edge (8) and a respective second end (20) facing the second longitudinal boundary edge (9);
wherein:
- the first end (19) of the second transversal crease line (16) is closer to the first longitudinal boundary edge (8) than the first end (19) of the first transversal crease line (15); and/or
- the second end (20) of the second transversal crease line (16) is closer to the second longitudinal boundary edge (9) than the second end (20) of the first transversal crease line (15); and/or
- the first end (19) of the fourth transversal crease line (18) is closer to the first longitudinal boundary edge (8) than the first end (19) of the third transversal crease line (17); and/or
- the second end (20) of the fourth transversal crease line (18) is closer to the second longitudinal boundary edge (9) than the second end (20) of the third transversal crease line (17).

2. Packaging blank according to claim 1, wherein a first distance (d1) between the first end (19) of the first transversal crease line (15) and the first longitudinal boundary edge (8) is larger than a second distance (d2) between the first end (19) of the second transversal crease line (16) and the first longitudinal boundary edge (8); and/or
- a third distance (d3) between the second end (20) of the first transversal crease line (15) and the second longitudinal boundary edge (9) is larger than a fourth distance (d4) between the second end (20) of the second transversal crease line (16) and the second longitudinal boundary edge (9); and/or
- a fifth distance (d5) between the first end (19) of the third transversal crease line (17) and the first longitudinal boundary edge (8) is larger than a sixth distance (d6) between the first end (19) of the fourth transversal crease line (18) and the first longitudinal boundary edge (8); and/or
- a seventh distance (d7) between the second end (20) of the third transversal crease line (17) and the second longitudinal boundary edge (9) is larger than an eighth distance (d8) between the second end (20) of the fourth transversal crease line (18) and the second longitudinal boundary edge (9).

3. Packaging blank according to claim 1 or 2, wherein no further transversal crease line transversal to the longitudinal central axis (A) is interposed between the first transversal boundary edge (10) and the first transversal crease line (15); and/or
no further transversal crease line transversal to the longitudinal central axis (A) is interposed between the second transversal boundary edge (11) and the third transversal crease line (17).

4. Packaging blank according to any one of the preceding claims, wherein the second transversal crease line (16) comprises a plurality of first linear portions (21) perpendicular to the longitudinal central axis (A) and a plurality of second linear portions (22) transversal to the longitudinal central axis (A) and the to the first linear portions (21).

5. Packaging blank according to any one of the preceding claims, wherein the second transversal crease line (16) and the fourth transversal crease line (18) delimit an intermediate region (28) designed to form a side wall of the package (37).

6. Packaging blank according to claim 5, wherein no longitudinal crease line extends from the second transversal crease line (16) and up to the fourth transversal crease line (18).

7. Packaging blank according to claim 5 or 6, and further comprising one or more first linear crease lines (29) extending from the second transversal crease line (16) and within the intermediate region (28) and/or one or more second linear crease lines (30) extending from the fourth transversal crease line (18) and within the intermediate region (28).

8. Packaging blank according to claim 7, wherein at least the first transversal crease line (15), the second transversal crease line (16), the third transversal crease line (17) and the fourth transversal crease line (18) define respective panels, which give origin and/or correspond to at least the top portion and the bottom portion of the respective package (37);
wherein each first linear crease line (29) is arranged in correspondence of a respective section defined by one or more respective panels, which in turn corresponds to a respective corner of the respective top portion of the respective package (37) and/or wherein each second linear crease line (30) is arranged in correspondence of a respective section defined by one or more respective panels, which in turn corresponds to a respective corner of the respective bottom portion of the respective package (37).

9. Packaging blank according claims 7 or 8, wherein the top crease pattern (4) defines panels that form the top portion of the package (37) and the bottom crease pattern (5) defines panels that form the bottom portion of the package (27);
wherein each first linear crease line (29) is arranged in correspondence of a section defined by one or more panels, which in turn corresponds to a corner of the top portion of the package (27) and/or each second linear crease line (30) is arranged in correspondence of a section defined by one or more panels, which in turn corresponds to a corner of the bottom portion of the package (27).

10. Packaging blank according to any one the preceding claims, wherein the top crease pattern (4) comprises a plurality of first additional crease lines (23) disposed between the first transversal crease line (15) and the second transversal crease line (16) and/or
the bottom crease pattern (5) comprises a plurality of second additional crease lines (24) disposed between the third transversal crease line (17) and the fourth transversal crease line (18).

11. Packaging blank according to any one of the preceding claims, wherein the first transversal crease line (15) and/or the third transversal crease line (17) is/are parallel to the first transversal boundary edge (10) and the second transversal boundary edge (11).

12. Packaging blank according to any one of the preceding claims, wherein no further crease lines are interposed between each first end (19) and the first longitudinal boundary edge (8) and/or no further crease lines are interposed between each second end (20) and the respective second longitudinal boundary edge (9).

13. Packaging blank according to any one of the preceding claims, wherein the packaging blank (2) comprises a multilayer structure.

14. Packaging blank according to claim 13, wherein the packaging blank comprises at least a layer of fibrous material and two layers of heat-seal plastic material interposing the layer of fibrous material between one another.

15. Package (37) filled with a pourable product formed from a packaging blank (2) according to any one of the preceding claims.
